# EUROPÄISCHE PATENTSCHRIFT

(11) **EP 2 294 624 B1**
(45) Veröffentlichungstag und Bekanntmachung des Hinweises auf die Patenterteilung: **13.12.2017**
(21) Anmeldenummer: 09761667.6
(22) Anmeldetag: 05.06.2009
(51) Int. Cl.: H02S 40/34, H02G 3/08

(54) **Anschlussdose für photovoltaische Module**
Junction box for photovoltaic modules
Boîte de jonction pour modules photovoltaïques

(30) Priorität: 12.06.2008 DE 102008028038; 13.11.2008 DE 102008057078
(43) Veröffentlichungstag der Anmeldung: 16.03.2011
(73) Patentinhaber: Anton Gensler GmbH, 98587 Steinbach-Hallenberg (DE)
(72) Erfinder: HORNUNG, Bastian, 99831 Ifta (DE); LIEBRICH, Klaus, 98547 Viernau (DE)
(74) Vertreter: Kruspig, Volkmar
(86) Internationale Anmeldenummer: PCT/EP2009/056941
(87) Internationale Veröffentlichungsnummer: WO 2009/150104

(56) Entgegenhaltungen:
- EP-A2- 1 729 348
- EP-A2- 1 729 369
- US-B1- 7 291 036

## Beschreibung

Die Erfindung betrifft eine Anschlussdose für photovoltaische Module, umfassend vorkonfektionierte Anschlusskabel, die in elektrischer Verbindung mit einem Stanzgitter stehen, wobei das Stanzgitter eine Leiterbahnstruktur aufweist, welche elektrische oder elektronische Komponenten, insbesondere Bypassdioden aufnimmt, weiterhin am Stanzgitter vorhandene Abschnitte, die in eine von der Stanzgitterebene abweichende Richtung orientiert sind, wobei in dieser Orientierungsrichtung im Dosenkörper Öffnungen vorhanden sind, in welche Kontaktmittel des photovoltaischen Moduls eingreifen, gemäß Oberbegriff des Patentanspruchs 1.

Aus der WO 2006/050890 ist eine Anschlusseinheit für photovoltaische Solarmodule vorbekannt.

Bei dieser Anschlusseinheit für photovoltaische Solarmodule sind freiliegende Anschlussabschnitte der Leiterbahn vorhanden. Gemäß der dortigen Lösung soll eine Anschlusseinheit geschaffen werden, die sich schnell am photovoltaischen Solarmodul anschließen lässt und wobei einzelne Teile einfach ausgetauscht werden können.

Hierfür ist erfindungsgemäß das Solarmodul mit freiliegenden Anschlussabschnitten der Leiterbahnen versehen. Die eigentliche Anschlusseinheit besteht aus einem Grundkörper und mindestens einem Einschubgehäuseteil sowie innenliegenden elektrischen Kontakten und Bauelementen. Die Anschlusseinheit ist direkt auf der Oberfläche des Solarmoduls dichtend angeordnet. Der Grundkörper besitzt eine Aussparung, in der innenliegend elektrische Kontaktelemente so ausgebildet, angeordnet und positioniert sind, dass sie mit einem Einschubgehäuse und dessen Einzelteilen und/oder den Leitern des Anschlusskabels über Steckverbindungen kontaktiert werden können. Diese Kontaktelemente sind mit einer Schalt- und Steuereinheit innerhalb des Einschubgehäuseteils verschaltet. Die Kontaktierung der elektrischen Kontaktelemente ist in einer Ebene mit der Auflagefläche auf der Leiterbahn des Solarmoduls angeordnet. Die Anschlusseinheit dient zur Energieabführung aus dem photovoltaischen Solarmodul zu Verbrauchern und dem Schutz und der Lebensdauerverlängerung der elektrischen Anschlüsse und der innenliegenden elektronischen Bauteile.

Die Art und Weise der elektrischen Verbindung bei einer solchen Anschlusseinheit ist aufwendig, wobei durch die notwendige Zugangsöffnung von der Oberseite der Einheit her auch keine ausreichende Dichtheit über die erwartete Lebensdauer von 20 und mehr Jahren gegeben ist.

Aus dem deutschen Gebrauchsmuster DE 20 2005 018 884 U1 ist eine Anschlussdose für ein Solarpaneel vorbekannt. Die Anschlussdose umfasst ein Gehäuse, in dem Anschlussmittel zum elektrischen Anschließen des Solarpaneels vorhanden sind. Weiterhin sind im Gehäuse Dioden angeordnet, die mit den Anschlussmitteln elektrisch verbunden werden, wobei die Dioden als mit den Anschlussdrähten versehene Bauelemente ausgeführt werden. Die Anschlussmittel umfassen eine Mehrzahl von nebeneinander angeordneten metallischen Kontaktelementen. Die Kontaktelemente sind als aus Metallblech bestehende, großflächige Klemmteile ausgebildet. Die Dioden sind jeweils mit ihren Anschlussdrähten zwischen zwei Klemmteilen klemmend angeschlossen und fixiert. Durch die Notwendigkeit der einzelnen Klemmkontaktierungsvorgänge für jede Diode ist der Fertigungsaufwand bzw. der Aufwand beim Komplettieren der Anschlussdose erheblich und es besteht die Gefahr, dass durch eine falsche Kontaktzuordnung Verschaltungsfehler auftreten. Auch erfordert die vorbekannte Anschlussdose einen aufschwenkbaren Deckel, der den Zugang zu den Kontaktierungsmitteln gewährleistet. Jede Lösung einer Anschlussdose mit Deckel führt jedoch zu nicht vermeidbaren Dichtigkeitsproblemen.

Aus der EP 1 442 503 B1 ist ein paneelartig aufgebautes elektrisches bzw. elektronisches Modul mit einer flachen Oberfläche mit freiliegenden kontaktierbaren Anschlussabschnitten als Teil einer im Wesentlichen ebenen Leiterbahnstruktur zum elektrischen Anschließen des Moduls vorbekannt.

Gemäß der Forderung, dass Solarstrommodule wind- und wetterfest auszuführen sind und ein Einsatz über 25 Jahre garantiert werden soll, müssen alle elektrischen Übergänge gegenüber dem Eindringen von Feuchtigkeit geschützt werden. Dieser Schutz gilt auch für notwendige Dioden. Gemäß EP 1 442 503 B1 soll die Aufgabe gelöst werden, die notwendigen elektrischen Verbindungen zwischen einer Anschlusseinheit und dem Solarmodul nicht nur mit einfacheren Mitteln, sondern auch maschinell durchführbar zu gestalten. Zur Lösung dieser Aufgabe wird vorgeschlagen, dass die Mittel zum Kontaktieren der Anschlussabschnitte des Moduls aus der Ebene der Leiterbahnstruktur herausgebogene und einen Teil der Leiterbahnstruktur darstellende Anschlussabschnitte und die Anschlussabschnitte des Moduls starre und aus der Ebene der Leiterbahnstruktur des Moduls herausbiegbare elektrische Leiterabschnitte sind, wobei die Anschlussabschnitte der Anschlusseinheit entsprechend der Anordnung der Anschlussabschnitte des Moduls angeordnet sind, so dass bei der mit dem Modul verbundenen Anschlusseinheit jeweils ein Anschlussabschnitt des Moduls und eine der Anschlusseinheit elektrisch miteinander verbunden in einem Abschnitt aneinander grenzen. Die Anschlusseinheit besitzt demnach eine Leiterbahnstruktur in Form eines Stanzgitters und die zum Kontaktieren der Anschlussabschnitte des Moduls vorgesehenen Anschlussabschnitte der Leiterbahnstruktur der Anschlusseinheit sind Teil des Stanzgitters, wobei auf dem Stanzgitter notwendige elektrische oder elektronische Komponenten wie beispielsweise Dioden und zumindest ein Anschlusskabel durch eine Fügeverbindung mit dem Stanzgitter verbunden angeordnet sind.

Das Stanzgitter wird durch einen Vergusskörper im Wege eines Spritzgussverfahrens gekapselt. Bei dem Verfahren zum Verbinden der Anschlusseinheit mit dem Solarmodul wird zunächst die Anschlusseinheit auf dem Modul positioniert, so dass die entsprechenden Anschlussabschnitte nebeneinander liegen. Es müssen dann die Anschlussabschnitte des Moduls ergriffen und von der Oberfläche des Moduls abgehoben werden. Im nächsten Schritt erfolgt dann ein Zusammenführen der Anschlussabschnitte des Moduls mit den Anschlussabschnitten der Anschlusseinheit, so dass anschließend die Verbindungseinheiten in einer anderen Raumlage angeordnet sind. Die ursprünglich unten liegenden und nicht zugänglichen Oberflächen der Anschlussabschnitte des Moduls sind nun zum Durchführen einer Fügeverbindung zum Verbinden jeweils eines Anschlussabschnitts des Moduls mit einem Anschlussabschnitt der Anschlusseinheit frei zugänglich. Die Verbindung der jeweiligen Anschlussabschnittpaare erfolgt dann durch Fügen, insbesondere mittels Verschweißen.

Aus der Schilderung des Kontaktierungsverfahrens wird deutlich, dass eine Vielzahl von Schritten zum Herstellen einer ausreichenden und sicheren elektrischen Verbindung erforderlich ist. Darüber hinaus muss das vorbekannte Solarmodul von seiner Oberseite her frei zugänglich bleiben, da ansonsten die notwendige Schweiß-Fügeverbindung nicht realisiert werden kann. Dieser offene Abschnitt muss im Nachhinein wieder dichtend verschlossen werden mit all den bereits geschilderten Nachteilen.

Die gattungsbildende EP 1 729 369 A2 offenbart eine Kontaktvorrichtung zum Kontaktieren von Leiterfolien im Zusammenhang mit der Ausbildung einer Anschlussdose für photovoltaische Module mit vorkonfektionierten Anschlusskabeln, die in elektrischer Verbindung mit einem Stanzgitter stehen. Die vorbekannte Lehre umfasst Klemmfedern zur Kontaktierung, welche als separate Bauteile ausgeführt sind, welche dem federelastetischen Aufstecken auf einen Stromleiterbereich und dem daran anliegenden Folienanschlussbereich dienen. Erst nach dem Aufstecken separater Klemmfedern wird ein Festklemmen des Folienleiteranschlussbereichs an den Stromleiterbereich erhalten.

Aus dem Vorgenannten ist es daher Aufgabe der Erfindung, eine weiterentwickelte Anschlussdose für photovoltaische Module anzugeben, die im höchsten Maße vorfertigbar ist und welche nur minimale Öffnungen oder Fenster aufweist, und zwar in einer solchen Form, die unbedingt notwendig ist, um eine Kontaktierung mit den Kontaktmitteln des photovoltaischen Moduls durchzuführen.

Die Lösung der Aufgabe der Erfindung erfolgt durch eine Anschlussdose gemäß der Merkmalskombination nach Patentanspruch 1, wobei die Unteransprüche zweckmäßige Ausgestaltungen und Weiterbildungen umfassen.

Demnach wird von einer Anschlussdose für photovoltaische Module, umfassend vorkonfektionierte Anschlusskabel, die in elektrischer Verbindung mit einem Stanzgitter stehen, ausgegangen, wobei das Stanzgitter eine Leiterbahnstruktur aufweist, welche elektrische oder elektronische Komponenten, insbesondere Bypassdioden aufnehmen kann. Weiterhin sind am Stanzgitter Abschnitte oder Biegeabschnitte vorhanden, die in eine von der Stanzgitterebene abweichende Richtung orientiert, z.B. umgebogen sind, wobei in dieser Orientierungsrichtung im Dosenkörper Öffnungen oder Fenster vorhanden sind, in welche an sich bekannte Kontaktmittel des photovoltaischen Moduls, sogenannte Bändchenkontakte, eingreifen. Bei einer weiteren Ausführungsform können am Stanzgitter spezielle Abschnitte angebracht werden, die Lyra- oder Omega-Kontaktbügel umfassen oder als solche ausgebildet sind. Diese Abschnitte können z.B. durch Stoffschluss oder aber auch durch Kraftschluss, hier wiederum beispielsweise durch Vernieten, am Stanzgitter fixiert werden.

Die angeformten Abschnitte oder die Biegeabschnitte sind als Lyra- oder Omega-Kontaktbügel ausgebildet, welche zwei gegenüberliegende, sich in Richtung des Solarmoduls aufweitende Schenkel sowie einen Klemmteil aufweisen. Die Kontaktmittel des photovoltaischen Moduls werden von den Schenkeln geführt aufgenommen und vom Klemmteil kontaktiert. Weiterhin ist der Dosenkörper mit Ausnahme der Öffnungen, die in Richtung des Moduls weisen, als komplett geschlossenes Spritzgussteil ohne irgendwelche weiteren Zugänge ausgeführt.

Das Stanzgitter besteht gemäß der Erfindung aus einem gegebenenfalls oberflächenveredelten, metallischen Material, wobei die Schenkel der Kontaktbügel aus der Flächenebene des Gitters durch Biegeumformen ausgebildet werden.

Am engsten Punkt der sich gegenüberliegenden Schenkel der Kontaktbügel ist ein definierter, toleranzbehafteter Abstand vorgesehen. Das Maß des Abstands ergibt sich aus den Dickenabmessungen der Kontaktmittel des photovoltaischen Moduls.

Nach dem elektrischen Verbinden oder Kontaktieren der Anschlusskabel mit vorgesehenen Abschnitten der Leiterbahnstruktur wird ein Vorspritzling erzeugt. Der Vorspritzling wird dann in einem nächsten Spritzschritt von einem designbestimmenden Konturkörper umgeben. Es besteht erfindungsgemäß die Möglichkeit, dass ausgehend von einem quasi Standard-Vorspritzling kundenspezifische, d.h. designorientierte Konturkörper erzeugt und damit vom äußeren Anschein her verschiedene Anschlussdosen realisiert werden.

Das Stanzgitter wird mit dem Anschlusskabel verbunden und dann anschließend der Vorspritzling hergestellt.

Am bzw. auf dem Konturkörper können eingeformte Angaben zur Typenspezifikation, zum Hersteller, zur Anwendung oder Ähnliches vorhanden sein.

Teile der Leiterbahnstruktur sind auftrennbar ausgebildet. Das Auftrennen kann am Vorspritzling vorgenommen werden.

Die elektrischen oder elektronischen Komponenten werden bevorzugt im Raum um oder zwischen den Lyra- oder Omega-Kontaktbügeln auf der Leiterbahnstruktur angeordnet. Damit kann der Bauraum und das Raumvolumen der gesamten Anschlussdose minimiert werden.

Die Kontaktmittel des jeweiligen photovoltaischen Moduls werden ausschließlich form- und/oder kraftschlüssig mit den Lyra- oder Omega-Kontaktbügeln verbunden. Irgendwelche zusätzlichen stoffschlüssigen Verbindungen, wie Löten oder Schweißen, die einen Zugang zu den Kontakten erforderlich machen, sind nicht notwendig.

Der fertige Dosenkörper mit den Öffnungen für den Zugang zu den Kontaktbügeln wird in Richtung zum photovoltaischen Modul auf diesem durch Stoffschluss, insbesondere durch Kleben fixiert. Oberseitig und auch an den Seitenflächen ist der Dosenkörper vollkommen dicht ausgebildet, so dass das Eindringen von Feuchtigkeit in das Doseninnere erschwert ist. Die Öffnungen im Dosenkörper werden als fensterartige Vertiefungen ausgebildet, wobei die Fensterabmessungen grundsätzlich minimiert sind, ohne die Bewegung der Kontaktbügel beim Kontaktierungsvorgang einzuschränken oder zu behindern. Ziel ist es, die Klebe- und damit Dichtfläche auf der Dosenunterseite zu maximieren, um einerseits eine sichere Fixierung der Anschlussdose auf dem Solarmodul zu gewährleisten und andererseits die notwendige Dichtigkeit über die angestrebte lange Lebensdauer sicherzustellen.

Um die von den Dioden erzeugte Wärme abzuführen, ohne dass Be- oder Entlüftungskanäle im Dosenkörper vorgesehen werden müssen, wird erfindungsgemäß das Spritzgussmaterial teilweise oder vollständig wärmeleitend ausgeführt. Hier besteht die Möglichkeit, dem Spritzgussausgangsmaterial eine definierte Menge von Metalloxiden, z.B. Al₂O₃, beizugeben, um die Wärmeleitung aus dem Inneren des Dosenkörpers heraus zu gestatten, jedoch die elektrische Isolation nicht zu gefährden. Ein weiterer in diesem Zusammenhang beachtenswerter Erfindungsgedanke besteht darin, die Materialmenge des Stanzteils bezogen auf den Wärmeableitungseffekt zu maximieren. Dabei dient das metallische Material des Stanzteils als Wärmesenke bezogen auf die Bypassdioden, die die Wärmequelle darstellen.

Ein weiterer Aspekt der vorliegenden Lehre besteht darin, dass Anschlusskabel und Leitungen zum Erreichen der geforderten Lebensdauer bei Photovoltaikanlagen stoffschlüssig umspritzt werden, und zwar zu dem Zweck, eine hohe Dichtigkeit über die gesamte Lebensdauer zu realisieren. Wenn jedoch ein Kabel bereits mit einem vernetzten Kunststoff versehen ist, ist eine stoffschlüssige Umspritzung des Kabels problematisch, da die miteinander verbundenen Polymerketten der vernetzten Leitungen keine ausreichende Möglichkeit für eine Verbindung mit dem Kunststoff-Umspritzungsmaterial bieten. Es hat sich in überraschender Weise gezeigt, dass dieses Problem durch eine Vorbehandlung der Leitungen lösbar ist, um den gewünschten Stoffschluss mit ausgewählten Kunststoffen herzustellen. Diese Vorbehandlung ist insbesondere eine Behandlung durch Einwirkung elektrischer Felder und/oder von KoronaEntladungen.

Die Erfindung soll nachstehend anhand eines Ausführungsbeispiels sowie unter Zuhilfenahme von Figuren näher erläutert werden.

Hierbei zeigen:
- Fig. 1: eine Detailansicht des Stanzgitters von der Unterseite (obere Abbildung) sowie von der Oberseite (untere Abbildung) in einer ersten Ausführungsform;
- Fig. 2: Darstellungen des kompletten Stanzgitters mit bereits elektrisch angeschlossenen, vorkonfektionierten Anschlusskabeln in einer Ansicht von oben und von unten (erste Ausführungsform);
- Fig. 3: eine Ansicht des kompletten Vorspritzlings von oben und unten, wobei in der unteren Darstellung die Fenster mit darin befindlichen Kontaktbügeln erkennbar sind;
- Fig. 4: eine Draufsicht sowie eine Unteransicht der kompletten Anschlussdose mit in einem zweiten Spritzgussschritt erzeugten Konturkörper;
- Fig. 5a: eine Abwicklung des Stanzgitters;
- Fig. 5b: eine Darstellung der Unterseite des Stanzgitters mit bereits durch Biegen erzeugten Lyra- bzw. Omega-Kontaktbügeln;
- Fig. 5c: eine seitliche Ansicht der Darstellung gemäß Fig. 5b;
- Fig. 5d: eine Detaildarstellung Z nach Fig. 5c mit erkennbarer Omega-Kontur des jeweiligen Kontaktbügels;
- Fig. 6: eine Detailansicht des Stanzgitters von der Oberseite (obere Abbildung) sowie von der Unterseite (untere Abbildung) in einer zweiten Ausführungsform;
- Fig. 7: Darstellungen des kompletten Stanzgitters der zweiten Ausführungsform mit bereits elektrisch angeschlossenen, vorkonfektionierten Anschlusskabeln in einer Ansicht von oben und von unten;
- Fig. 8: eine Ansicht des kompletten Vorspritzlings von oben und von unten mit der Variante der zweiten Ausführungsform, wobei in der oberen Darstellung fensterartige Ausnehmungen mit darin befindlichen Kontaktbügeln erkennbar sind;
- Fig. 9: eine Unteransicht (obere Abbildung) sowie eine Draufsicht (untere Abbildung) der kompletten Anschlussdose, die in einem zweiten Spritzgussschritt erzeugt wird und einen Konturkörper bildet;
- Fig. 10a: eine Abwicklung des Stanzgitters der zweiten Ausführungsform;
- Fig. 10b: eine Darstellung der Unterseite des Stanzgitters mit bereits durch Biegen erzeugten Lyra- bzw. Omega-Kontaktbügeln und aufgerichteten Zungen zum Fixieren der Anschlussbeinchen von Bypassdioden gemäß der zweiten Ausführungsform der Erfindung;
- Fig. 11: eine seitliche Darstellung des Stanzgitters wie anhand der Fig. 10b gezeigt und
- Fig. 12: eine Detaildarstellung A eines beispielhaften Lyra-Kontaktbügels.

Die erfindungsgemäße Anschlussdose für photovoltaische Module gemäß den Figuren umfasst vorkonfektionierte Anschlusskabel 1, die mit verpolungssicheren Steckern 2 bzw. Buchsen 3 ausgerüstet sind.

Die Anschlusskabel 1 werden mit abisolierten Enden 4 mit Flächenabschnitten 5 der Leiterbahnstruktur 6 des Stanzgitters bevorzugt durch Stoffschluss, z.B. Löten oder Schweißen, oder Kraftschluss, z.B. durch Crimpen, verbunden.

Die Leiterbahnstruktur weist Ausstanzungen 7 auf, die Anschlussbeinchen 8 von elektrischen Bauelementen 9 aufnehmen. Die Anschlussbeinchen 8 werden mit den Ausstanzungen 7 zum Herstellen einer sicheren Verbindung verlötet oder verschweißt.

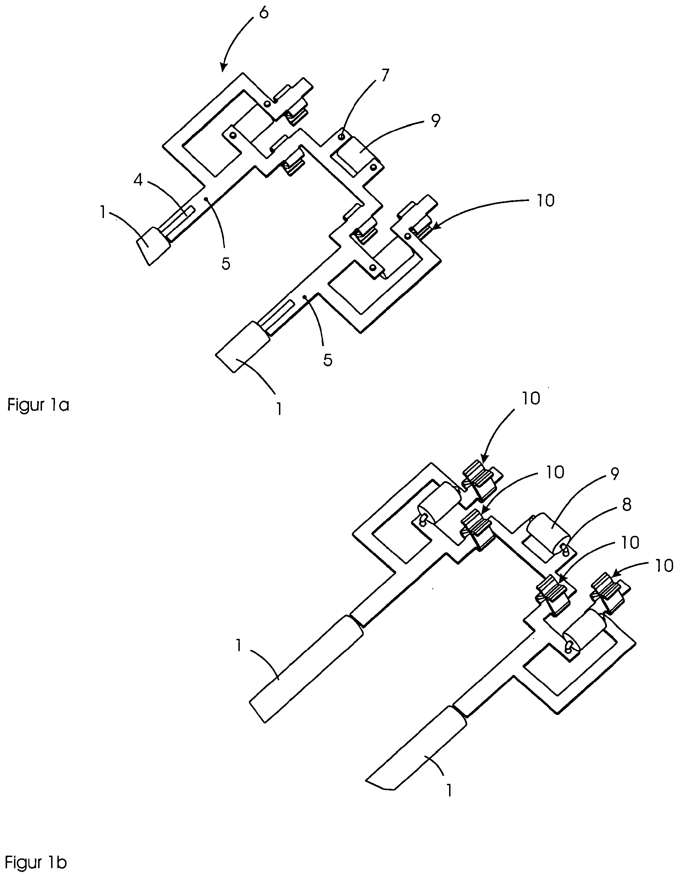

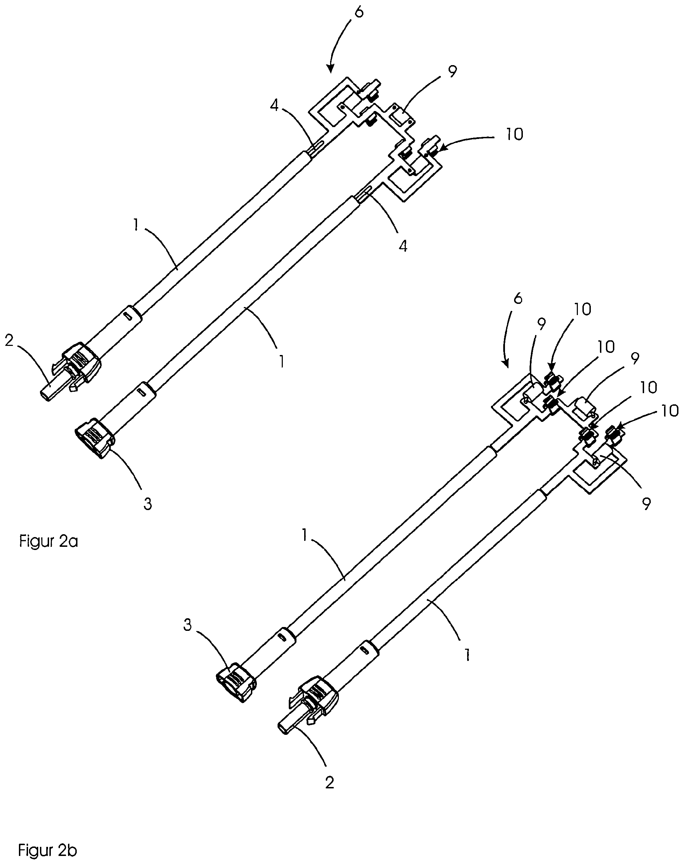

Die Einheit gemäß den Fig. 1 oder 2 kann vor dem Ausführen des Spritzvorgangs nach Freischneiden elektrisch geprüft und gegebenenfalls durch Austausch oder Nacharbeit funktionsfähig gemacht werden. Das Freischneiden kann aber auch nach Erstellen des Vorspritzlings erfolgen.

Das Stanzgitter weist angeformte oder Biegeabschnitte in Form von Lyra- oder Omega-Kontaktbügeln 10 auf. Das Stanzgitter kann aber auch separat gefertigte Biegeabschnitte in Form von Lyra- oder Omega-Kontaktbügeln aufweisen. In diesem Fall werden die separaten Teile mit dem Stanzgitter z.B. stoffschlüssig durch Verschweißen oder kraftschlüssig, z.B. durch Vernieten verbunden.

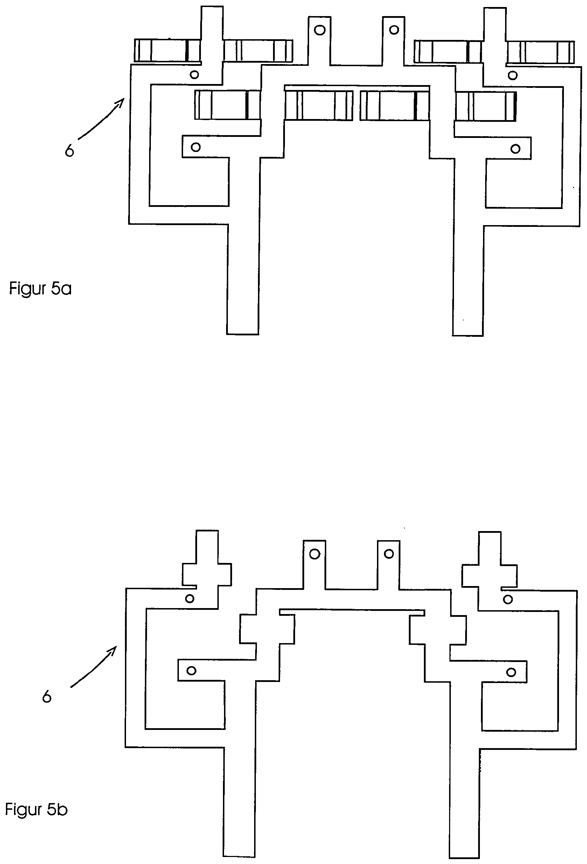

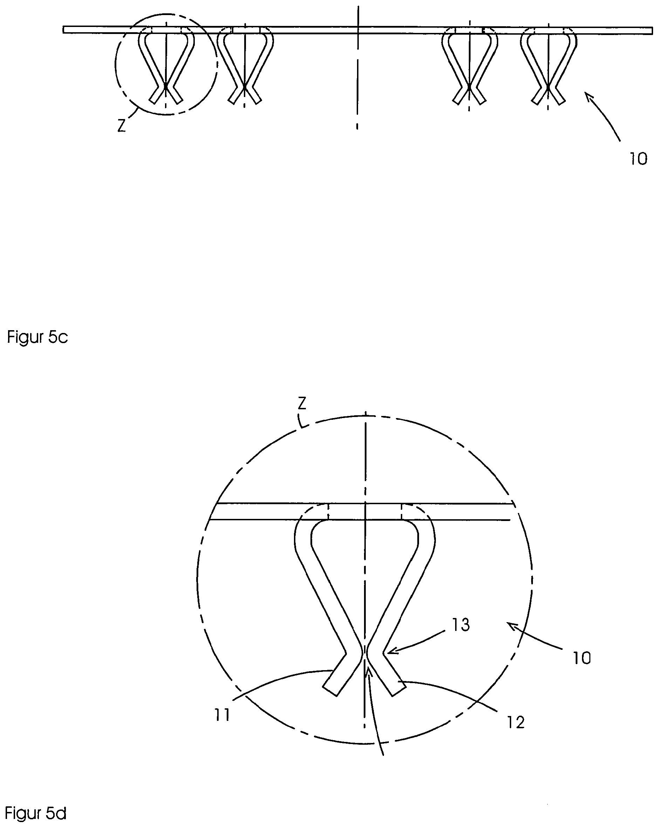

Die Form der Kontaktbügel ist gemäß den Darstellungen nach den Fig. 5a bis 5d gezeigt.

So weisen die jeweiligen Lyra- oder Omega-Kontaktbügel zwei sich gegenüberliegende, in Richtung Modul aufweitende Schenkel 11, 12 auf.

Diesen Schenkeln 11, 12 anschließend ist ein Klemmteil oder ein Klemmabschnitt 13 vorhanden.

Beim Herstellen der Verbindung zum Kontaktmittel des photovoltaischen Moduls, insbesondere eines sogenannten Kontaktbändchens, wird dieses führend von den Schenkeln 11, 12 aufgenommen und gelangt in das Klemmteil oder den Klemmabschnitt 13 hinein und wird dort form- und/oder kraftschlüssig gehalten. Durch die Lyra- bzw. Omega-Form der Kontaktbügel 10 ist eine ausreichende Feder- und damit Kontaktkraft gewährleistet.

Die Herstellung des Stanzgitters mit den Lyra- oder Omega-Kontaktbügeln 10 kann sehr einfach und kostengünstig erfolgen.

Das Stanzgittermaterial besteht aus einem z.B. galvanisch beschichteten und damit veredelten metallischen Material. Um die Lötfähigkeit für die abisolierten Enden 4 der Anschlusskabel 1 zu gewährleisten, kann ein Verzinnen erfolgen.

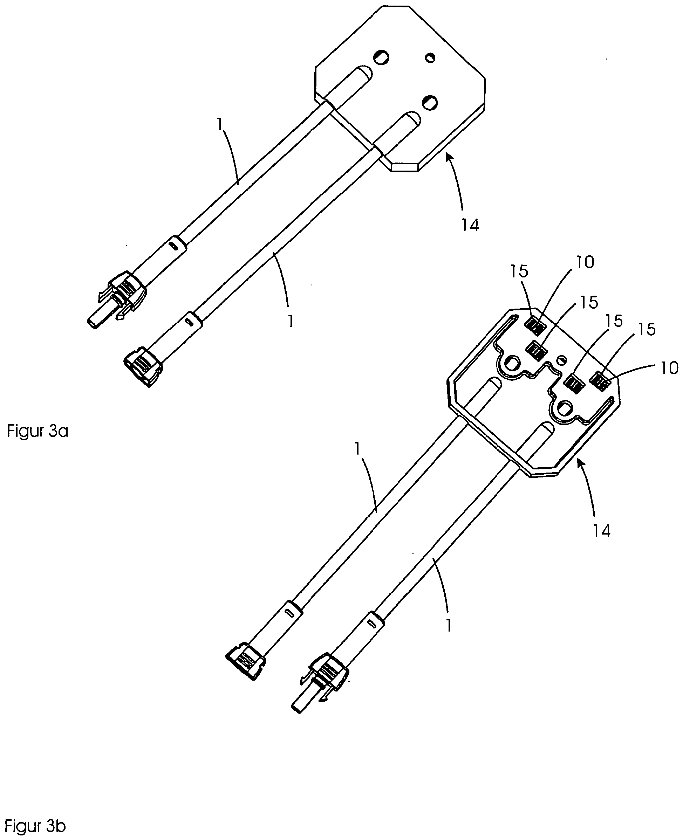

Die mit den Anschlusskabeln 1 komplettierte Anordnung des Stanzgitters nach Fig. 2 wird zu einem Vorspritzling gemäß Fig. 3 weitergebildet. Dieser beispielhafte Vorspritzling enthält bereits an seiner Unterseite, die später dem Solarmodul zugewandt ist, Fensterabschnitte 15, in denen die Lyra- bzw. Omega-Kontaktbügel 10 frei liegen.

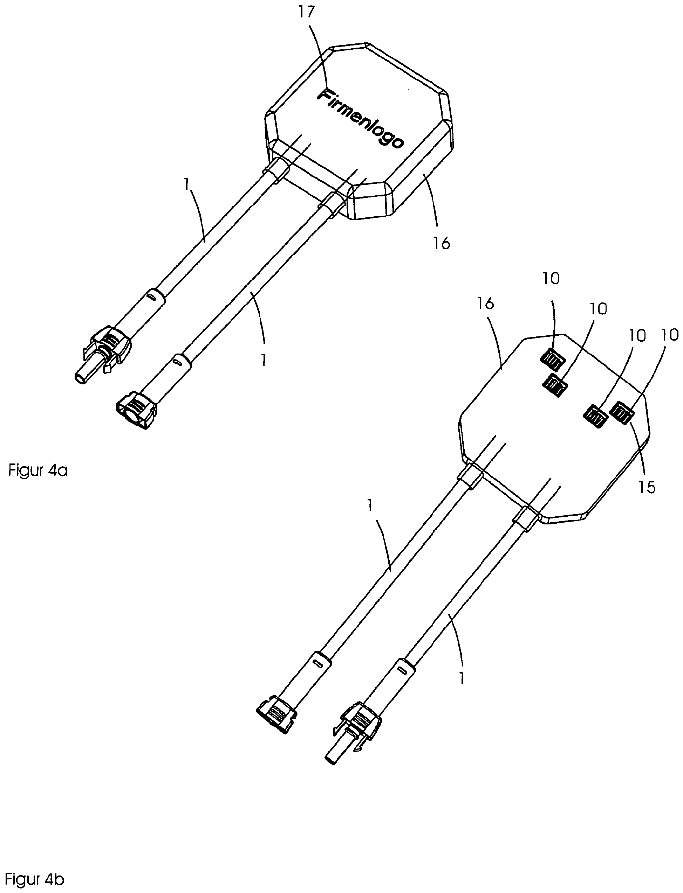

In einem weiteren Spritzschritt, dessen Ergebnis in der Fig. 4 gezeigt ist, wird ein designbestimmender Konturkörper 16 erzeugt. Dieser Konturkörper 16 verschließt die noch offenen Stellen des Vorspritzlings 14 gemäß Fig. 3.

Aus den Größenverhältnissen gemäß der Ansicht der Unterseite nach Fig. 4 der Anschlussdose ist erkennbar, dass eine sehr große ebene Bodenfläche zur Verfügung steht, die für eine stoffschlüssige Verbindung zum Solarmodul genutzt werden kann. Die Abmessungen der Fenster 15 sind nur unwesentlich größer als der Raum, den die Kontaktbügel 10 in Anspruch nehmen, was zum Zweck der Abdichtung einen wesentlichen Vorteil darstellt.

Insbesondere auf der Oberseite kann der Konturkörper 16 eingeformte Angaben wie z.B. Angaben zum Hersteller oder dergleichen Informationen 17 aufweisen.

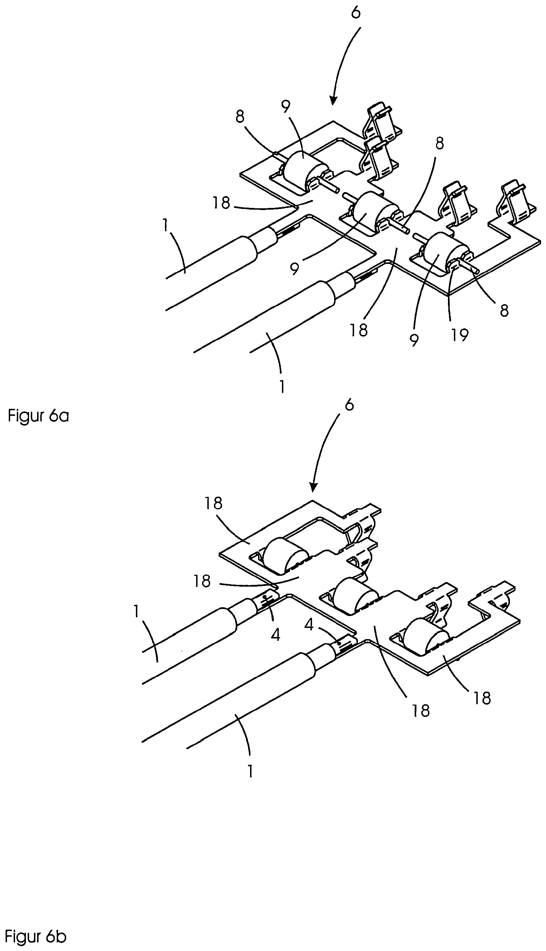

Die zweite Ausführungsform der Erfindung sei mit Hilfe der Fig. 6 bis 12 näher erläutert.

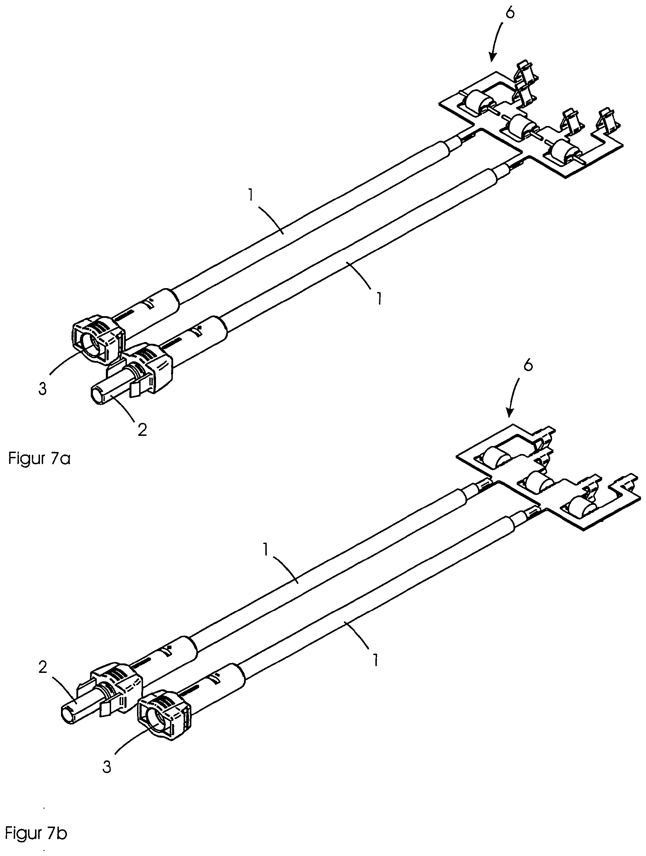

Auch bei dieser Ausführungsform ist wiederum eine Leiterbahnstruktur in Form eines Stanzteils 6 vorhanden (in der Fig. 6 und 7 erfolgte noch kein Freischneiden der Bügelabschnitte zwischen den Dioden bzw. den elektronischen Bauelementen 9).

Um eine effektive Wärmesenke für die Dioden 9 bzw. andere wärmeerzeugende elektronische Bauelemente zu bilden, weist die Leiterbahnstruktur Abschnitte mit vergrößerter metallischer Fläche auf.

Diese Abschnitte 18 befinden sich bevorzugt in der Nähe der Wärmequellen, d.h. der elektronischen Bauelemente 9.

Bei der Darstellung nach Fig. 6 werden die Anschlussbeinchen 8 der Bauelemente 9 nicht abgebogen, sondern auf ein definiertes Maß gekürzt. Die Anschlussbeinchen 8 ruhen in zungen- oder fingerartigen Fortsätzen 19, die aus der Ebene des Stanzgitters, d.h. der Leiterbahnstruktur 6 herausgebogen wurden und einen Aufnahmeschlitz für die betreffenden Anschlussbeinchen 8 freilassen.

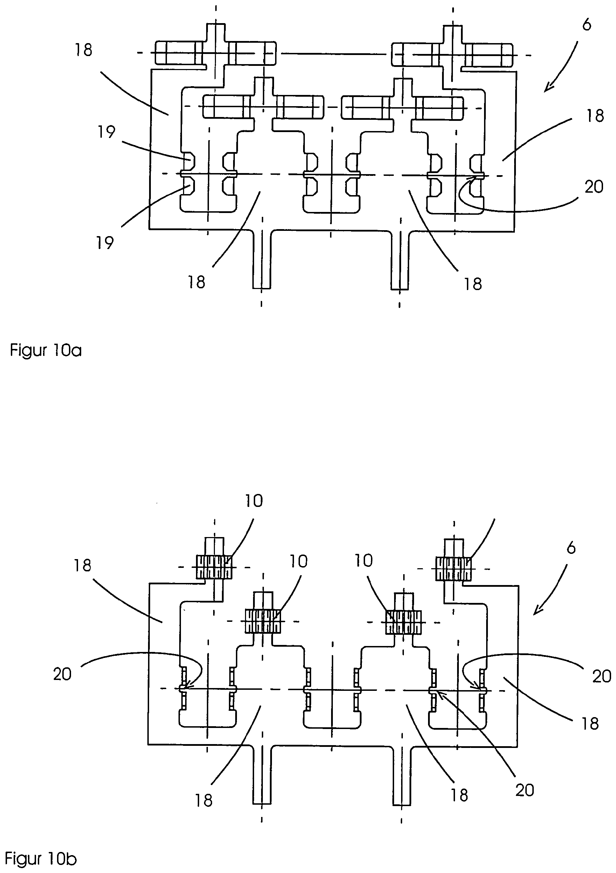

Dieses Detail ist in den Fig. 10a und 10b nochmals dargestellt.

Der Schlitz zur Aufnahme der Anschlussbeinchen 8 trägt dort das Bezugszeichen 20.

Die Fig. 7 zeigt die mit Anschlusskabeln 1 komplettierte Anordnung des Stanzgitters, wobei die Kabel 1 an ihren Enden bereits Kontaktmittel, nämlich Stecker 2 und Buchse 3 aufweisen.

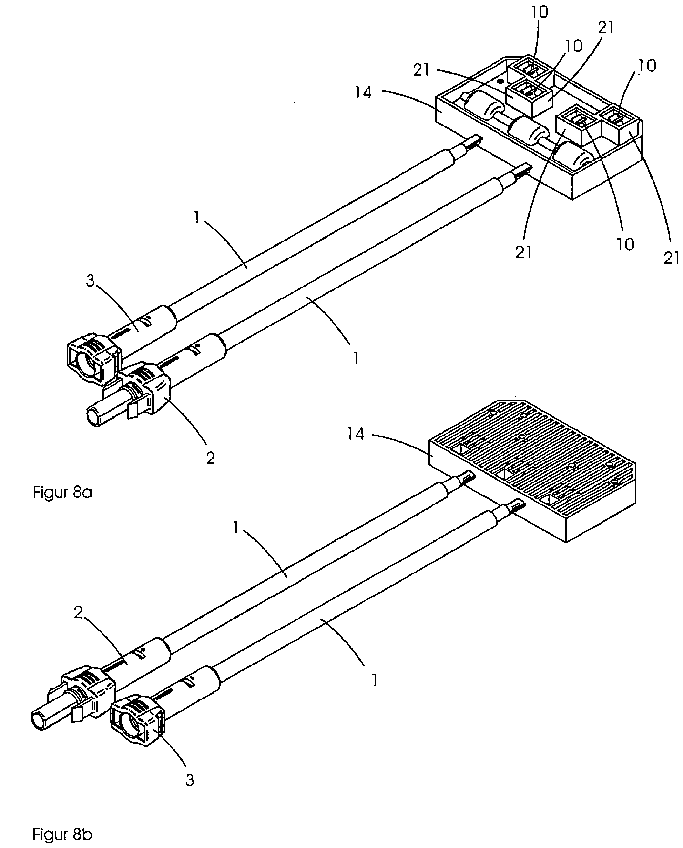

Mit Hilfe der Fig. 8 wird das Ergebnis illustriert, das sich als Vorspritzling 14 darstellt.

Die Lyra- oder Omega-Kontaktbügel 10 sind von je einem Rahmen 21 umgeben, der in seiner Mitte ein Fenster bildet, in dem sich die Kontaktbügel 10 bewegen können.

Beim Vorspritzvorgang werden auch die elektronischen Bauelemente 9 (Bypassdioden) umspritzt, und zwar mit einem wärmeleitenden Material, so dass die beim Betrieb entstehende Verlustwärme abgeführt werden kann.

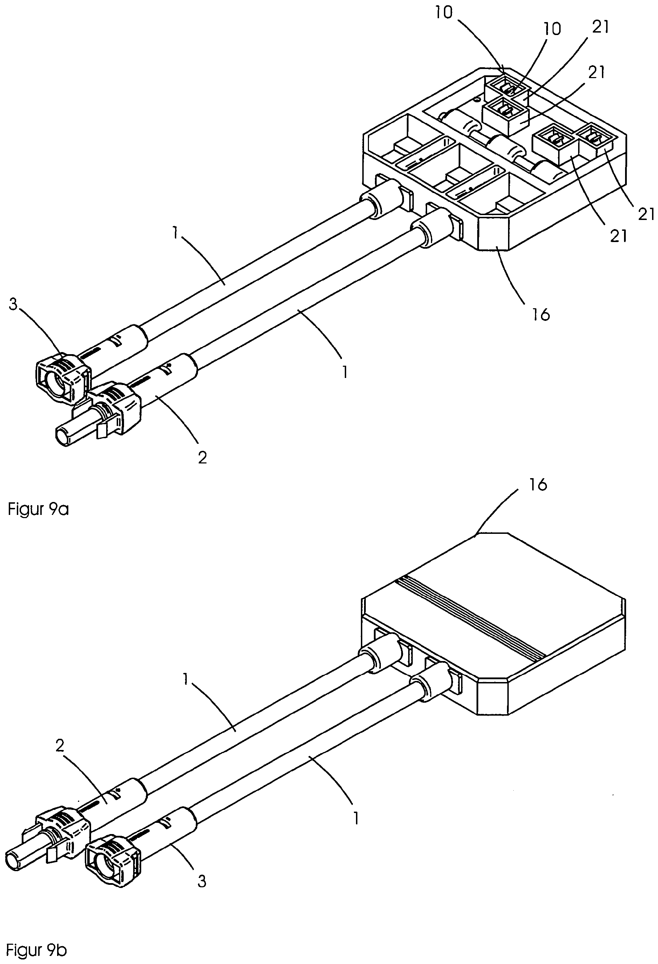

In einem weiteren Spritzschritt, dessen Ergebnis Fig. 9 zeigt, wird auch bei der zweiten Ausführungsform ein designbestimmender Konturkörper 16 erzeugt. Dieser Konturkörper 16 (Unteransicht obere Darstellung nach Fig. 9) enthält Lufträume, um die Wärmeabfuhr der elektronischen Bauelemente zu optimieren. Ungeachtet der Lufträume sind jedoch alle anderen funktionswesentlichen Elemente dicht abgeschlossen.

Die hinsichtlich der Ausführungsform der Fenster 15 getroffenen Aussagen zur ersten Ausführungsform gelten auch für die zweite Ausführungsvariante der Erfindung, so dass dieselben Vorteile gegeben sind.

Die Fig. 10a zeigt die Abwicklung der Leiterbahnstruktur 6 bzw. des Stanzgitters (noch nicht elektrisch relevant freigeschnitten). Bei dieser Abwicklung sind sehr gut die ausgestanzten Fortsätze 19 erkennbar, die sich jeweils paarweise gegenüberliegen und einen Schlitz 20 nahezu mittig aufnehmen.

Der Schlitz 20 dient dem Fixieren eines entsprechenden Anschlussbeinchens 8 eines elektronischen Bauelements 9, insbesondere einer Bypassdiode.

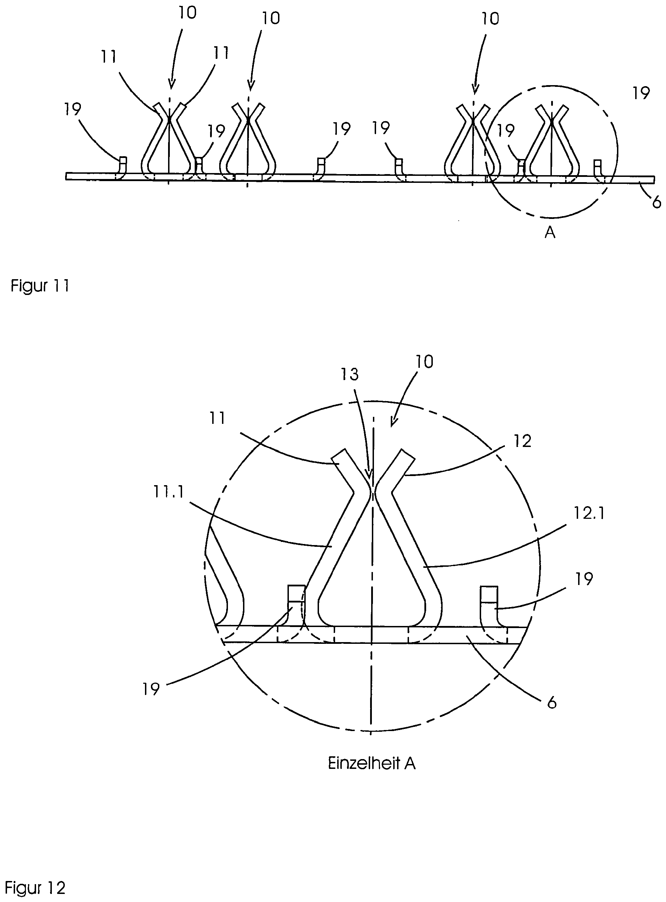

Die Lyra- oder Omega-Kontaktbügel 10, wie im Detail in den Fig. 11 und 12 bei der Ausführung gemäß dem zweiten Beispiel gezeigt, weisen zwei gegenüberliegende Schenkel 11 und 12 auf.

Die Schenkel 11 und 12 öffnen sich in der Darstellung nach Fig. 12 (Einzelheit A) nach oben V-förmig. Zwischen der Engstelle zwischen den Schenkeln 11 und 12 ist ein Klemmabschnitt 13 gebildet.

Beim Herstellen der Verbindung zum Kontaktmittel des photovoltaischen Moduls, insbesondere eines dort vorhandenen Kontaktbändchens oder eines Kontaktstreifens, wird dieses Teil führend von den Schenkeln 11 und 12 aufgenommen und gelangt in den Klemmabschnitt 13 hinein und wird dort form- und/oder kraftschlüssig gehalten.

Durch die Form der Kontaktbügel 10 ist eine ausreichende Feder- und damit Kontaktkraft für eine lange Betriebs- und Lebensdauer gewährleistet.

Wie aus der Zusammenschau der Fig. 5d und 12 erkennbar ist, beträgt der Winkel zwischen den längeren Schenkelabschnitten 11.1 und 12.1 beispielsweise etwa 50° bis 60°.

### Bezugszeichenliste

- 1: Kabel
- 2: Stecker
- 3: Buchse
- 4: abisoliertes Ende
- 5: Flächenabschnitt
- 6: Leiterbahnstruktur
- 7: Ausstanzung
- 8: Anschlussbeinchen
- 9: elektronisches Bauelement
- 10: Lyra- oder Omega-Kontaktbügel
- 11, 12: Schenkel
- 11.1 / 12.1: Schenkelabschnitte
- 13: Klemmteil
- 14: Vorspritzling
- 15: Fenster
- 16: Konturkörper
- 17: Informationsangabe
- 18: Abschnitte mit vergrößerter Fläche
- 19: Fortsatz
- 20: Schlitz
- 21: Rahmen

## Patentansprüche

1. Anschlussdose für photovoltaische Module, umfassend vorkonfektionierte Anschlusskabel (1), die in elektrischer Verbindung mit einem Stanzgitter stehen, wobei das Stanzgitter eine Leiterbahnstruktur (6) aufweist, welche elektrische oder elektronische Komponenten (9), insbesondere Bypassdioden aufnimmt, weiterhin am Stanzgitter vorgesehene Biegeabschnitte, die in eine von der Stanzgitterebene abweichende Richtung orientiert sind, wobei in dieser Orientierungsrichtung im Dosenkörper Öffnungen vorhanden sind, in welche Kontaktmittel des photovoltaischen Moduls eingreifen und die Biegeabschnitte als Lyra- oder Omega-Kontaktbügel (10) ausgebildet sind, welche zwei gegenüberliegende, sich in Richtung Modul aufweitende Schenkel (11, 12) sowie ein Klemmteil (13) aufweisen, wobei die Kontaktmittel von den Schenkeln (11, 12) geführt aufgenommen und vom Klemmteil (13) kontaktiert sind, sowie weiterhin der Dosenkörper mit Ausnahme der Öffnungen (15), die in Richtung des Moduls weisen, als Spritzgussteil ausgeführt ist,
**dadurch gekennzeichnet, dass**
die Biegeabschnitte angeformt sind und das Stanzgitter aus einem metallischen Material besteht, wobei die Schenkel (11, 12) der Kontaktbügel (10) aus der Flächenebene des Stanzgitters durch Biegeumformen ausgebildet sind, wobei nach dem elektrischen Verbinden der Anschlusskabel (1) mit der Leiterbahnstruktur (6) ein Vorspritzling erzeugt wird, welcher in einem nächsten Spritzschritt von einem kundenspezifische, designbestimmenden Konturkörper umgehen wird, wobei das Spritzgussmaterial teilweise oder vollständig wärmeleitend ausgeführt ist.

2. Dose nach Anspruch 1,
**dadurch gekennzeichnet, dass**
der Konturkörper (16) eingeformte Angaben (17) zur Typenspezifikation, zum Hersteller, zur Anwendung oder dergleichen Information aufweist.

3. Dose nach einem der vorangegangenen Ansprüche,
**dadurch gekennzeichnet, dass**
Teile der Leiterbahnstruktur (6) auftrennbar ausgeführt sind.

4. Dose nach einem der vorangegangenen Ansprüche,
**dadurch gekennzeichnet, dass**
die Öffnungen (15) im Dosenkörper als fensterartige Vertiefung ausgebildet sind, wobei die Fensterabmessungen minimiert werden, ohne die Bewegung der Kontaktbügel (10) beim Kontaktierungsvorgang einzuschränken oder zu behindern.

## Claims

1. Junction box for photovoltaic modules, comprising pre-assembled connection cables (1) that are electrically connected to a punched grid, the punched grid having a strip conductor structure (6) which receives electric or electronic components (9), in particular bypass diodes, further comprising bending sections provided on the punched grid and oriented in a direction that deviates from the punched grid plane, wherein orifices are provided in the box body in this oriented direction into which contact means of the photovoltaic module engage, and the bending sections are designed as lyre or omega contact clips (10) comprising two opposite legs (11, 12), that expand in the direction of the module, as well as a clamping part (13), wherein the contact means are received by the legs (11, 12) in a guided manner and are contacted by the clamping part (13), and wherein further, except for the orifices (15) pointing in the direction of the module, the box body is constructed as an injection-molded part,
**characterized in that**
the bending sections are integrally formed, and the punched grid is made of a metallic material, wherein the legs (11, 12) of the contact clips (10) are formed by bending them out of the surface plane of the punched grid, wherein after electrically connecting the connection cables (1) with the strip conductor structure (6) a pre-molded part is produced, which, in a next injection molding step, is surrounded by a customer-specific design-determining contour body, wherein the injection molding material is partially or completely thermally conductive.

2. Box according to claim 1,
**characterized in that**
the contour body (16) comprises incorporated details (17) about the type specification, the producer, the use or the like information.

3. Box according to one of the preceding claims,
**characterized in that**
parts of the strip conductor structure (6) are constructed to be separable.

4. Box according to one of the preceding claims,
**characterized in that**
the orifices (15) in the box body are formed as window-like cavities, with the window dimensions being minimized without restricting or obstructing the movement of the contact clips (10) during the contacting process.

## Revendications

1. Boîte de jonction pour modules photovoltaïques, comportant des câbles de jonction (1) pré-confectionnés qui sont en connexion électrique avec une grille poinçonnée, la grille poinçonnée présentant une structure de pistes conductrices (6) qui reçoit des composants électriques ou électroniques (9), en particulier des diodes de by-pass, ainsi que des portions recourbées prévues sur la grille poinçonnée qui sont orientées dans une direction qui se distingue du plan de la grille poinçonnée, et des ouvertures sont prévues dans cette direction d'orientation dans le corps de la boîte, dans lesquelles viennent s'engager des moyens de contact du module photovoltaïque, et les portions recourbées sont réalisées sous forme d'arceaux de contact en lyre ou en oméga (10) qui comprennent deux branches opposées (11, 12) s'évasant en direction du module ainsi qu'une partie de serrage (13), les moyens de contact étant reçus en étant guidés par les branches (11, 12) et étant mis en contact par la partie de serrage (13), et de plus le corps de la boîte est réalisé sous forme de pièce moulée par injection, exception faite des ouvertures (15) dirigées en direction du module,
**caractérisée en ce que**
les tronçons recourbés sont surmoulés et la grille poinçonnée est constituée en un matériau métallique, les branches (11, 12) des arceaux de contact (10) étant réalisées par cintrage hors du plan de surface de la grille poinçonnée, et après la connexion électrique des câbles de connexion (1) à la structure de pistes conductrices (6), on réalise une ébauche qui, dans une étape d'injection suivante, est entourée par un corps de contour spécifique au client et déterminant l'aspect, le matériau de moulage par injection étant réalisé partiellement ou complètement de façon thermoconductrice.

2. Boîte selon la revendication 1,
**caractérisée en ce que**
le corps de contour (16) comprend des indications (17) intégrées par moulage concernant la spécification du type, le fabricant, l'utilisation ou des informations similaires.

3. Boîte selon l'une des revendications précédentes,
**caractérisée en ce que**
des parties de la structure de pistes conductrices (6) sont réalisées séparables.

4. Boîte selon l'une des revendications précédentes,
**caractérisée en ce que**
les ouvertures (15) dans le corps de la boîte sont réalisées sous forme de creux en forme de fenêtre, les dimensions de la fenêtre étant minimisées sans restreindre ou entraver le mouvement des arceaux de contact (10) lors de l'opération de mise en contact.
